# EUROPEAN PATENT APPLICATION

(11) **EP 4 199 134 A1**
(43) Date of publication of application: **21.06.2023**
(21) Application number: 21215156.7
(22) Date of filing: 16.12.2021
(51) Int. Cl.: H01M 4/00

(54) **THERMAL BARRIER ASSEMBLIES CONTAINING ADHESIVE COMPOSITIONS**

(71) Applicant: 3M Innovative Properties Company, Saint Paul, MN 55133-3427 (US)
(72) Inventor: Schachke, Martin, 58708 Menden (DE); Rosen, Kerstin Christina, 50670 Köln (DE); Bieber, Dr. Pierre Reinhard, 40221 Düssseldorf (DE); Klünker, Eike, 41564 Kaarst (DE)
(74) Representative: Hettstedt, Stephan

(57) **Abstract**

In one aspect of the present disclosure, there is provided a thermal runaway protection film for a lithium ion battery, the film having a first major surface and a second major surface opposing the first major surface, the film comprising at least one protection layer comprising (a) at least one silicone and (b) at least one silicate compound and/or at least one silicon oxide compound; wherein component (b) is contained in the at least one protection layer in an amount of at least 40 wt.-%, based on the total weight of the at least one protection layer, wherein at least one major surface of the thermal runaway protection film exhibits adhesive properties.

## Description

### Technical Field

The present disclosure relates to a thermal protection film for a lithium ion battery which exhibits certain adhesive properties. The present disclosure further provides a method for preparing a thermal runaway protection film. Further, the present disclosure relates to the use of the thermal runaway protection film for the prevention or mitigation of a thermal runaway event in a lithium ion battery. Finally, the present disclosure provides a lithium ion battery module and a lithium ion battery comprising the thermal protection film as described herein.

### Background

Batteries based on Lithium ion technology are currently the preferred solution for automotive e-mobility. Usually, multiple Lithium ion cells are stacked in a row forming a battery module. In common automotive applications, a battery consists of multiple modules within a housing.

Such Lithium ion batteries have an operating window between room temperature and about 40 °C. Above a temperature of from about 80 to 100 °C, there is a risk of uncontrolled electrolyte decomposition followed by additional heat and pressure increase inside the cell. Finally, the separator in the cell will melt and the resulting internal shortcut leads to excessive heat increase called thermal runaway. This also leads to a abrupt and significant increase of gas pressure within the cells, which may break or rupture the cells, leading to hot gases being blown out of the cells at temperatures above 1200 °C, which on top may ignite outside the cell and lead to damage of the surrounding cells, with the same outcome. Of course, this scenario is of great concern in construction of modern electrical vehicles, in particular automobiles. Recent regulations and legislations have already taken account on this, calling for a minimum time after occurrence of a thermal runaway event in which the passengers may leave the vehicle safely.

Therefore, there exists a desire in the art for materials which may stop or at least significantly slow down such a thermal runaway, i.e. which exhibits a certain resistance to towards heat and blast, mechanical strength, and/or is easily accessible, and easy to manufacture, transport and apply. It would be also desirable if the material was easily formed into three-dimensional shapes, and further provides certain thermal and electrical insulation. Furthermore, it is desirable that the material may be easily attached to the components to be protected and securely fixed in position.

**Summary**The present disclosure provides a thermal runaway protection film for a lithium ion battery,the film having a first major surface and a second major surface opposing the first major surface, the film comprising
at least one protection layer comprising (a) at least one silicone and (b) at least one silicate and/or silicon oxide mineral filler compound in an amount of at least 40 wt.-%, based on the total weight of the at least one protection layer, wherein at least one major surface exhibits adhesive properties..

The present disclosure further provides a battery casing, comprising the thermal runaway protection film composite construction as described herein.

Furthermore, the present disclosure provides a method for producing a thermal runaway protection film, the method comprising the following steps:
(i) compounding at least one at least one silicate compound and/or silicon oxide mineral filler into silicone;
(ii) forming at least one protection layer from the silicone composition obtained in step (i); and
(iii) optionally, drying or curing the at least one protection layer obtained in step (ii), thereby obtaining a thermal runaway protection film;
wherein the at least one silicate compound and/or the silicon oxide mineral filler is contained in the at least one protection layer an amount of at least 40 wt.-%, based on the total weight of the at least one protection layer.

Finally, the present disclosure provides a use of the thermal runaway protection film for the prevention or mitigation of a thermal runaway event in a lithium ion battery.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items. Furthermore, it is understood that the term "comprise" as used herein may also embrace the term "consists of" in the sense of "consists only of', but in general is used according to its meaning generally used in the art. Hence, limiting down "comprise" to "consists of" or "comprising" to "consisting of" is fully embraced in the present disclosure.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The present disclosure provides a thermal runaway protection film for a lithium ion battery,the film having a first major surface and a second major surface opposing the first major surface, the film comprising at least one protection layer comprising (a) at least one silicone and (b) at least one silicate and/or silicon oxide mineral filler compound in an amount of at least 40 wt.-%, based on the total weight of the at least one protection layer, wherein at least one major surface exhibits adhesive properties.

The thermal runaway protection film according to the present disclosure may exhibit at least one or even a combination of desirable properties such as good handling properties, cheap and easy production, non-toxic, the ability to be bend and shaped, and the ability to withstand high temperatures, in particular when high temperatures and/or a stream of particles and/or gases are inflicted only locally or on small areas of the battery composite construction. In particular, the fact that the protection film as described herein is in the form of a silicone film gives rise to the advantage that the protection film is flexible, easy to handle, easy transportable, easy to apply even by means of fast robotic equipment, and may be shaped into other shapes desirable for producing battery modules or batteries. Furthermore, silicone films would usually not withstand the high temperatures and/or blasts encountered during thermal runaway events in modern lithium ion batteries used in particular in the automotive industry. However, using silicate compounds and/or silicon oxide compounds in the amounts as described herein, it became possible to provide protection films that actually withstand this challenging influences at least over a certain period of time. Furthermore, the at least one major surface of the thermal runaway protection film makes the film easily attachable to the components to be protected, where it will also remain fixed in position.

Accordingly, the protection film according to the present disclosure is highly suitable for mitigating or even preventing the high-temperature and high-velocity outbursts which typically occur during a thermal runaway event in a modern battery, e.g. a lithium ion battery used in modern vehicles. It is also highly suitable to be employed into manufacturing processes of battery cells, battery modules and batteries on industrial scale due to its abilities to being safely and easily transported, cut and shaped into the forms desired, and applied onto the substrates and fixed into positions.

The protection film according to the present disclosure may be provided in common forms and shapes known and appreciated in the art. Thus, films which may be provided in rolls or sheets. Also, die cuts are possible.

In general, the protection film as described herein comprises at least one protection layer comprising (a) at least one silicone and (b) at least one silicate compound and/or a silicon oxide mineral filler in an amount of at least 40 wt.-%, based on the total weight of the at least one protection layer. Hence, protection film consisting of one protection layer are embraced by the present disclosure, but also two, three, four or more layers are disclosed herein. The at least one silicate compound and/or the silicon oxide mineral filler is contained in the at least one protection layer in an amount of at least 40 wt.-%, based on the total weight of the at least one protection layer. This amount is preferably higher, i.e. wherein the at least one protection layer comprises at least 45 wt.-% of the at least one silicate compound and/or a silicon oxide mineral filler, preferably of at least 50 wt.-%, more preferably of at least 60 wt.-%, based on the total weight of the at least one layer protection layer. High loadings with silicate compound into the silicone matrix of the at least one protection layer offer improved mechanical, chemical and temperature resistance, while the general characteristics of the silicone film are preserved. In particular, the films may still be bendable, rollable, and be flexible in general. This is particularly advantageous for production, storage, and application of the film as well as desirable for many applications or the protection films as described herein. Preferably, the protection films according to the present disclosure the at least one silicate and/or a silicon oxide mineral filler compound is contained in the at least one protection layer in an amount of up to 85 wt.-%, preferably of up to 80 wt.-%, more preferably 77.5 wt.-% based on the total weight of the at least one protection layer.

The at least one silicate compound and/or at least one silicon oxide compound is not particularly limited, as long as it is compatible with the at least one silicone, and provides the desirable effects of improved thermal and mechanical resistance of the protection layer. Best results were found in kaolin, metakaolin, mullite, wollastonite, an aluminium oxide silicon oxide mineral filler, and any combinations and mixtures thereof. Of these compounds, mullite and an aluminium oxide silicon oxide mineral filler yielded the best temperature resistance. Hence, it is preferred that the at least one silicate compound and/or at least one silicon oxide compound is selected from kaolin, metakaolin, mullite, wollastonite, an aluminium oxide silicon oxide mineral filler and any combinations and mixtures thereof, preferably metakaolin, mullite, wollastonite, an aluminium oxide silicon oxide mineral filler and any combinations and mixtures thereof, and more preferably mullite, wollastonite and/or an aluminium oxide silicon oxide mineral filler, even more preferably mullite and/or an aluminium oxide silicon oxide mineral filler. A suitable aluminium oxide silicon oxide mineral filler is commercially available under the trade designation "Kormullit".

The term "adhesive properties" as used herein has the meaning commonly used in the art, i.e. the adhesive properties comprise the capability of bonding to a substrate. That is, the thermal runaway protection films according to the present disclosure may be attached with its major surface having adhesive properties onto a substrate, to which it will then adhere and remains fixed in position.

The at least one silicone as used herein is not particularly limited, as long as stable films may be generated thereby. Silicones for this purpose are well-known in the art and readily commercially available, even in large amounts for industrial purposes. The silicone may also be selected with regard to the desired properties of the protection film and the intended application. Preferably, the at least one silicone as used herein is selected from silicone rubbers. The silicone rubber may be a two-component or one-component silicone. For instance, silicone/silicone rubbers for use herein are commercially available from Wacker Chemie AG und the trade designation SilGel, such as Wacker SilGel 612 A/B. With regard to the ability to bond onto a substrate, it is preferred that the silicone of the at least one major surface exhibiting adhesive properties exhibits hydroxide/alcohol and/or acid moieties. This has the effect that to metal substrate such as steel or aluminium adhesive bonds may be formed. Without wanting to being bound by theory, it is thought that this is due to the (albeit thin) oxidative layer present on the surface of common metals, and the reactions between the oxygen atoms or hydroxy groups present there together with the reactive groups present in the major surface of the silicon protection film as described herein.

The thermal runaway protection film according to the present disclosure may also comprise at least one adhesive layer. That is, the adhesive layer comprises at least one adhesive which is chemically distinct from the silicone of the protection film. This has the advantage that the adhesive properties may be adapted and selected according to the intended use or substrate. That is, bonding to a broad variety of materials apart from metal surfaces becomes possible, e.g. to polymer, glass, ceramic, carbon fiber, or glass fiber material surfaces. Preferably, the at least one adhesive layer comprises a silicone adhesive, a pressure sensitive adhesive, a structural adhesive, and any combinations thereof. It is preferred that the at least one adhesive layer comprises an adhesive film or adhesive tape. A silicone adhesive may have the advantage of good compatibility with the silicone protection layer as well as with most metal substrates. Preferably, the silicone adhesive comprises at least one polysiloxane, and optionally at least one tackifier. Silicone adhesives and corresponding tackifiers are well-established in the art and may be easily selected by the skilled person in accordance with the silicone protection films as described herein and the substrate. Preferably, the at least one adhesive layer comprises a silicone transfer adhesive. A silicone transfer adhesive film is available from 3M Company under the designatin 3M 91022. Further, a pressure sensitive adhesive is very advantageous with regards to ease of application and quick fixation of the protection films as described herein into position. This is particularly advantageous for industrial manufacturing processes, either manually or even by means of quick robotic equipment. Pressure sensitive adhesives, also in form or films or tapes, are well-known in the art. Preferably, the pressure sensitive adhesive is selected from styrene block copolymers, styrene-butadiene-styrene, styrene-ethylene/butylene-styrene, styrene-ethylene/propylene, styrene-isoprene-styrene butyl rubbers, ethylene-vinyl acetates, (meth)acrylates, nitriles, vinyl ethers, and optionally comprising at least one tackifier. Furthermore, structural adhesives may be advantageous due to the strong adhesive bonds being formed. Structural adhesives, also in the form of films and tapes, are well-established in the technical field of industrial adhesive technology, in particular in manufacturing operations in automotive, industrial transportation and aerospace. Preferably, the structural adhesive comprises at least one epoxy resin and at least epoxy curing agent. The adhesive layer may also comprise a liner atop of its major surface facing away from the protection layer of the protection films according to the present disclosure.

It is preferred that the thermal runaway protection film comprises a polymer layer between the protection layer and the adhesive layer. This may add to help the adhesive layer being fixed and bonded to the protection layer as described herein. That is, compatibility challenges arising from the chemical nature of the silicone surface and the adhesive surface may be avoided. Preferably, the adhesive layer is a pressure sensitive adhesive layer, and wherein the thermal runaway protection film comprises a polymer layer between the protection layer and the adhesive layer. Preferably, the polymer layer comprises at least one polymer selected from poly(methyl methacrylates, acrylonitrile butadiene styrenes, polyamides, polylactic acids, polybenzimidazoles, polycarbonates, polyesters, polyethers polyether sulfones, polyoxymethylenes, polyetherimides, polyethylenes, polyphenylene oxides, polyphenylene sulfides, polypropylenes, polyvinyl chlorides, polyvinylidene fluorides, and polytetrafluorethylenes. The polymer layer may comprise at least one thermoplastic polymer. Generally, the polymer layer is having a first major surface adjacent to a major surface of the protection layer and a second major surface opposed to the first major surface. It was found that for easy manufacture of a thermal protection film as described herein and for providing good compatibility and bonding between silicone protection layer and adhesive layer, commercially available polymer tapes, films or liners are suitable. Therefore, it is preferred that the polymer layer is having a first major surface adjacent to a major surface of the protection layer and a second major surface opposed to the first major surface, and wherein the polymer layer is a film, tape or liner, preferably is a liner.

In this regard, it is highly advantageous that the first major surface of the polymer layer, preferably the liner, comprises a silicone affine coating. This has the advantage of good bonding between the polymer liner and the silicone protection layer. The other side of the polymeric layer, preferably a liner, has usually good or even excellent compatibility with common adhesives, adhesive films or adhesive tapes. Preferbly, the second major surface of the polymer layer, preferably a liner, facing the adhesive layer comprises a layer affine to pressure sensitive adhesives. Thereby, a good stability between protection layer as described herein and adhesive layer is achieved. Also, this construction may easily manufactured, which is also highly desirable from both an economic and ecologic point of view. Preferably, the liner comprises a polymer selected from polyester, polyether, polyethylenetherephthalate, polypropylene, wherein the first major surface comprises a silicone affine coating comprising a release coating, and wherein the adhesive layer comprises a pressure sensitive adhesive. Such a construction is stable, easy to manufacture, easy to store and to transport, for example in the form of a roll, and easy to apply, securely attaching the thermal runaway protection film as described herein onto a substrate and fixing it into position. Furthermore, this enables attachment of the silicone protection films as described herein to different substrates like metal, plastic, ceramic and fiber enforced plastic without using silicone containing adhesive materials, which is not desirable for some applications.

The at least one protection layer may further comprise inorganic fillers, preferably selected from silicon oxide, metal hydroxide, preferably aluminium hydroxide and/or magnesium hydroxide, aluminium oxide, and any combinations and mixtures thereof.

Furthermore, adding woven or non-woven layers may also be advantageous with regard to manufacture, stability and/or handling of the protection films as described herein. Accordingly, it is preferred that the protection film according to the present disclosure further comprises at least one woven or non-woven layer. In this regard, it is preferred that the at least one woven or non-woven layer comprises organic or inorganic fibers, preferably non-woven fibers such as a vlies or cloth. It is also preferred that the organic fibers are selected from polymeric fibers, and wherein the inorganic fibers are glass fibers.

While it is already advantageous that the protection films according to the present disclosure are flexible, bendable and formable into shapes, it is further advantageous for some applications that the protection film remains fixed in a shape it was formed into. For instance, it is advantageous if a protection film wrapped around a cell, a module or a battery would be fixed in a more rigid state after manufacture of the cell, module or battery. It was found that this could be achieved by addition or incorporation of a thermoplastic grid to or into the protection films as described herein. Therefore, it is preferred that the protection film according to the present disclosure further comprises at least one polymeric grid, preferably a thermoplastic grid. The use of a thermoplastic grid has the advantage that simple heating and subsequent cooling would fix the protection film into a pre-formed shape. The at least one polymeric grid may be incorporated into the at least one protection layer or may be attached onto the at least one protection layer. In particular, the latter is advantageous from the manufacturing point of view since the thermoplastic grid may simply be laminated on top of a pre-manufactured film as an option in a large-scale manufacturing process. Hence, it is preferred that the polymeric grid, preferably the thermoplastic grid, is laminated onto the at least one protection layer. In this regard, it is preferred that the polymeric grid is a thermoplastic grid, thermoplastic mesh or thermoplastic scrim. Preferably, the thermoplastic grid comprises at least one thermoplastic material selected from acrylnitril-butadiene-styrene (ABS), polyamide (PA), polylactate (PLA), polymethylmethacrylate (PMMA), polycarbonate (PC), polyethelenetherephthalate (PET), polyethylene (PE), polypropylene (PP), polystyrene (PS), polyetheretherketone (PEEK), polyvinylchloride (PVC), and any combinations and mixtures thereof, preferably polypropylene and polyamide. Thermoplastic grids and the like are readily commercially available and may be chosen by the skilled person in accordance with the intended application of the protection film as described herein. Also, the thermoplastic grid may comprise a fabric, grid, nonwoven, or mesh fibrous material coated or impregnated with the at least one thermoplastic material. Preferably, the fibrous material is selected from polymeric material, glass fiber, and carbon fiber. This may further add to the stability and durability of the protection films according to the present disclosure. Moreover, it is preferred that the thermoplastic grid exhibits a thickness in the range of from 0.1 to 1.4 mm, preferably from 0.2 to 1.2 mm, more preferably from 0.3 to 1 mm. It if further preferred that the thermoplastic grid exhibits an area weight according to DIN EN 12127 in the range of from 50 to 450 g/m², preferably from 80 to 350 g/m², and more preferably from 100 to 300 g/m².

It was also found that the addition of at least one endothermal filler to the protection film as described herein may be advantageous. Endothermal fillers have the effect of absorbing the heat emitted by a thermal runaway event and may therefore be able to at least partially and locally lower the temperature. This may be advantageous in that the protection film as described herein may last longer, and/or the temperature of the backside of the film may be lower as opposed to a film not containing any endothermal fillers. Accordingly, it is preferred that the at least one protection layer further comprises at least one endothermal filler. In addition or as an alternative, the protection film as described herein further comprises at least one additional layer comprising at least one endothermal filler, preferably wherein the at least one additional layer comprises silicone rubber. In this regard, it is preferred that the at least one endothermal filler is selected from sodium metasilicate pentahydrate, ammonium dihydrogen phosphate, inorganic carbonates, preferably calcium magnesium carbonates and calcium silicon magnesium carbonates, metal hydroxides, preferably aluminium hydroxide and magnesium hydroxide, mineral compounds comprising water of crystallisation, preferably aluminium hydroxide, magnesium carbonate, magnesium oxide, Mg(OH)₂ 4 MgCO₃ 4H₂O, MgCl₂ 5Mg(OH)₂ 7H₂O, and any combinations and mixtures thereof.

It was further found that adding inorganic fillers having a low density and/or low thermal conductivity to the at least one protection layer of the protection film as described herein may be advantageous. In particular, lower densities may be advantageous in lowering the weight of the protection film, and materials of low thermal conductivity may have the advantage of providing a protection film which offers a certain thermal insulation and protection, respectively. Accordingly, it is preferred that the at least one protection layer comprises inorganic fillers having a low density and/or low thermal conductivity. In this regard, it is preferred that the inorganic fillers have a thermal conductivity TC at 25 °C according to ASTM D5470 of less than 0.2 W/m K, preferably less than 0.15 W/m K, and more preferably less than 0.1 W/m K, and even more preferably less than 0.8 W/m K. It is further preferred that the inorganic fillers have a thermal conductivity TC at 25 °C according to ASTM D5470 of more than 0.001 W/m K. With regard to density, it is preferred that the inorganic fillers exhibit a bulk density of less than 3.5 g/cm³, preferably less than 3.2 g/cm³, and more preferably less than 3 g/cm³. While any inorganic material may be used which falls under these parameters, it is preferred that inorganic fillers are selected from diatomaceous earth, perlite and fumed silica and any combinations and mixtures thereof. These compounds are readily available in large amounts, are non-toxic and compatible with the at least one silicate compound as well as with the silicone rubber in the at least one protection layer as described herein. Preferably, the inorganic filler and the at least one silicate compound are contained in the at least one protection layer in a total amount as defined in any one of claims 1 to 3. In summary, it is desirable to have a protection film having a low thermal conductivity. This may be achieved by the protection films according to the present disclosure. Hence, the protection films as described herein may advantageously exhibit a thermal conductivity ASTM D5470 of less than 1 W/m K, preferably less than 0.8 W/m K, and more preferably less than 0.7 W/m K.

It is also preferred that the protection film as described herein further comprises at least one metal mesh. This has the advantage of improved mechanical stability, in particular against blast, and may also help dissipation of thermal energy away from the point of impact. The at least one metal mesh may be attached onto the at least one protection layer or may be embedded into the at least one protection layer. Preferably, the metal of the metal mesh is selected from steel, titanium, aluminium, and any combinations thereof, preferably is selected from steel and aluminium, and more preferably is selected from steel. It is preferred that the at least one metal mesh has a thickness in the range of from 0.3 mm to 2 mm, preferably 0.5 to 1.8 mm, more preferably from 0.6 to 1.7 mm. The metal mesh may exhibit a mesh width in the range of from 0.5 to 3 mm, preferably from 0.7 to 2.8 mm, more preferably from 0.9 to 2.5 mm.

The protection film according to the present disclosure preferably has a thickness of at least 0.5 mm, preferably at least 0.6 mm, and more preferably 0.7 mm. It is also preferred that the protection film as described herein has a thickness of up to 3.5 mm, preferably up to 3.2 mm, and more preferably up to 3 mm. Preferably, the protection film has a thickness in the range of from 0.5 to 3.5 mm, preferably from 0.6 to 3.2 mm, more preferably from 0.7 to 3 mm. Lower thicknesses may not be able to provide the desired protection in case of a thermal runaway event, and higher thicknesses may be deemed unpractical for many applications. In general, it is also preferred that the protection film as described herein exhibits an area weight of at least 900 g/m², more preferably of at least 1000 g/m², more preferably of at least 1100 g/m², and even more preferably of at least 1200 g/m². Preferably, the thermal runaway protection film exhibits an area weight of up to 8000 g/m², preferably of up to 7000 g/m², more preferably of up to 6000 g/m². Hence, it is preferred that the thermal runaway protection film as described herein exhibits an area weight in the range of from 900 to 8000 g/m², preferably from 1000 to 7000 g/m², more preferably from 1100 to 6000 g/m².

The protection film according to the present disclosure advantageously may provide thermal insulation. Also, the protection film as described herein may further provide electrical insulation against arcing. Both thermal insulation and electrical insulation against arcing are very advantageous in a thermal runaway event in a lithium ion battery or battery module. In this regard, it is preferred that the protection film exhibits a dielectrical breakdown strength direct current according to DIN EN ISO 60243-2 (DC) in the range of from 1 to 20 KV/mm.

For transportation and application purposes, it is preferred that the protection film further comprises at least one liner on at least one of its major surfaces. Liners for silicone films are well-known to the skilled person and readily commercially available. The protection film according to the present disclosure may be provided in the form of a sheet or wound up in a roll, preferably a level-wound roll. The latter is particularly advantageous since it is suited for applications by automated, in particular fast robotic equipment, which is highly desirable for large scale industrial manufacturing operations.

The present disclosure also provides a lithium ion battery module, comprising the protection film according to the present disclosure, and a lithium ion battery, comprising the protection film or the lithium ion battery module as described herein.

The present disclosure further provides a method for producing a thermal runaway protection film, the method comprising the following steps:
(i) compounding at least one at least one silicate compound and/or silicon oxide mineral filler into silicone;
(ii) forming at least one protection layer from the silicone composition obtained in step (i); and
(iii) optionally, drying or curing the at least one protection layer obtained in step (ii), thereby obtaining a thermal runaway protection film;
wherein the at least one silicate compound and/or the silicon oxide mineral filler is contained in the at least one protection layer an amount of at least 40 wt.-%, based on the total weight of the at least one protection layer.

It is understood that the materials, amounts, thicknesses and other parameters as disclosed herein in conjunction with the protection layer, adhesive layer, polymer layer and the protection film as described herein also apply without restriction to the method according to the present disclosure. Compounding the at least one silicate compound into silicone, preferably silicone rubber, may be carried out by means well-established in the art. Forming at least one protection layer may be applying the silicone composition is carried out by means of spraying, calandering, coating, printing or applying by doctor blade the silicone composition obtained in step (i). Preferably, in step (ii), the silicone composition is applied onto a liner. It is also preferred that an adhesive film or adhesive tape is attached on the thermal protection runaway protection film. In particular, it is preferred that an adhesive layer is applied onto the liner, or wherein the liner comprises an adhesive layer on its major surface opposed to the major surface onto which the silicone composition is applied.

Finally, the present disclosure provides a use of the protection film as described herein for the prevention or mitigation of a thermal runaway event in a lithium ion battery. Preferably, the protection film as described herein is used in automotive, commercial transportation, marine, construction or aerospace application. In particular, it is preferred that the battery is a battery of a vehicle, a building, or a bicycle. The protection film as described herein is preferably used in a cell, a module, and/or a battery. For instance, the film may advantageously be arranged around a cell, a module, or a battery, or between cells or modules in a battery, or under the lid of a battery.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### Torch and Grit Test (T&GT)

Each sample was mounted to a either a 0.7 mm thick galvanized steel or stainless-steel sheet by VHB tape (3M Company). The sample was positioned 44.5 mm from the nozzle of a Champion Bench hydrogen torch burner obtained from Bethlehem Apparatus Company Inc, of Hellertown, PA, USA. A thermocouple (TC0) was positioned 31.8 mm from the nozzle of the burner and another was placed on the backside center of the steel sheet. A blaster gun was loaded with 120 grit aluminum oxide non-shaped media and aligned with the nozzle of the torch at the same distance (44.5 mm) from the sample. The torch of the Champion Bench Burner was adjusted to 1200 °C. The media blaster gun was then triggered at 172.4 kPa or 344.7 kPa. A sample was either: 1) exposed to 12 blast cycles each lasting 15 seconds with 10 seconds of active blast time and 5 seconds of inactive blast time at a target location or 2) exposed to 1 blast cycle lasting 20 seconds with 5 seconds of inactive blast time, followed by 10 seconds of active blast, and then 5 seconds of inactive blast time at three target locations spaced 38.1 mm (1.5 inches) apart. Sample testing was stopped if a hole caused by either burn through or the media blasts was visible in the layers of the barrier article.

### Dielectric strength test

Dielectric strength of the material was determined in accordance with DIN EN 60243-2 with direct current. The results were determined as KV/mm.

### Free Fall Shock test

A simple free fall shock test to evaluate the mechanical stability of the samples (as expected in automotive applications from road shock, acceleration and vibration) was carried out. The following protocol was followed: Samples of the examples and comparative examples as also used in the torch & grit tests were dropped from a height of 1.8 m to the floor. This procedure was followed for 20 cycles. After each cycle, the sample was visually inspected for damage such as cracks, parts fallen off, or breaking of the construction.

### Example 1

Constructions having the following layers were generated:
1.) ECR Glass Vlies 50 g/m² 0.5 mm thickness
2.) Silicone rubber with silicate compound filler
3.) ECR Glass Vlies 50 g/m² 0.5 mm thickness

Layers 1.) and 3.) were used to wrap layer 2.) to enable proper handling during production until drying was completed.

Generally, the silicate compounds were compounded into the silicone rubber (either Wacker Silgel 612 or a two-component silicone rubber), and a protection layer was formed by coating the resulting silicone rubber/silicate compound filler composition onto a polymeric carrier in the desired thickness. In cases were a fabric or metal mesh was used (layer 3.) above), the silicone rubber/silicate compound filler composition was coated to both sides of the fabric or metal mesh. Afterwards, the ECR glass vlies was applied to both sides. Finally, this construction was dried at room temperature for 3 h.

**Table 1: Formulation 1.**

| | g | solid % |
|---|---|---|
| Silicone rubber | 80 | 28.9 |
| Mullite | 196.4 | 71.1 |

A film was produced. Onto this film, a double-sided silicone tape 3M 91022 was attached. This construction (example 1) was stable. It was evaluated with a simple adhesion text on a vertical glass plate over 5 days. In particular, the film according to example 1 was attached with the silicone tape-side onto the glass surface by hand. By removing the sample after 5 days (again, manually) the bonding effect was considered to be still high.

### Example 2

3M acrylic adhesive tape 467MP was first laminated to the non-siliconized side of the 50 micrometers thick polyester liner Silphan 50 in a separate step prior to silicone coating process.

A silicone film has been prepared by mixing 60 parts of Silgel 612 A Part with 40 parts of Silgel 612 B Part and 248 parts of Kormullit. The raw materials were mixed using a mixer from Typhoon.

The silicone film precursor mixture was then coated with a knife coater between a multilayer film consisting of the tie layer laminated with the PSA layer and a neat polyester liner (process liner). The coating gap was adjusted to 800 micrometers.

The silicone film precursor material in between the process and product liner was then cured in a convection oven at a temperature of 160 °C for 2.5 min. After curing the process liner was stripped off and the final silicone film multilayer construction was wound up into a roll. The final silicone film thickness was 1 mm. The flexible silicone film equipped with the PSA layer can be easily applied to a variety of substrates (metal, plastic, glass). A 90° Peel test has been conducted on a stainless-steel substrate. The adhesion level of the multilayer film on the stainless-steel substrate was 8.4 N/cm.

## Claims

1. A thermal runaway protection film for a lithium ion battery, the film having a first major surface and a second major surface opposing the first major surface, the film comprising
at least one protection layer comprising (a) at least one silicone and (b) at least one silicate compound and/or at least one silicon oxide compound; wherein component (b) is contained in the at least one protection layer in an amount of at least 40 wt.-%, based on the total weight of the at least one protection layer, wherein at least one major surface of the thermal runaway protection film exhibits adhesive properties.

2. The thermal runaway protection film according to claim 1, wherein the silicone of the at least one major surface exhibiting adhesive properties exhibits hydroxide/alcohol and/or acid moieties.

3. The thermal runaway protection film according to any one of the preceding films, wherein the silicone is a silicone rubber.

4. The thermal runaway protection film according to any one of the preceding claims, wherein the thermal runaway protection film comprises at least one adhesive layer, preferably comprising a silicone adhesive, a pressure sensitive adhesive, a structural adhesive, and any combinations thereof.

5. The thermal runaway protection film according to claim 4, wherein the silicone adhesive comprises at least one polysiloxane, and optionally at least one tackifier.

6. The thermal runaway protection film according to claim 8, wherein the pressure sensitive adhesive is selected from styrene block copolymers, styrene-butadiene-styrene, styrene-ethylene/butylene-styrene, styrene-ethylene/propylene, styrene-isoprene-styrene butyl rubbers, ethylene-vinyl acetates, (meth)acrylates, nitriles, vinyl ethers, and optionally comprising at least one tackifier.

7. The thermal runaway protection film according to any one of claims 4 to 7,
wherein the at least one adhesive layer comprises an adhesive film or adhesive tape.

8. The thermal runaway protection film according to any one of the preceding claims, wherein the thermal runaway protection film comprises a polymer layer between the protection layer and the adhesive layer, wherein the polymer layer is having a first major surface adjacent to a major surface of the protection layer and a second major surface opposed to the first major surface, and wherein the polymer layer is a film, tape or liner, preferably is a liner.

9. The thermal runaway protection film according to claim 8, wherein the polymer layer comprises at least one polymer selected from poly(methyl methacrylates, acrylonitrile butadiene styrenes, polyamides, polylactic acids, polybenzimidazoles, polycarbonates, polyesters, polyethers polyether sulfones, polyoxymethylenes, polyetherimides, polyethylenes, polyphenylene oxides, polyphenylene sulfides, polypropylenes, polyvinyl chlorides, polyvinylidene fluorides, and polytetrafluorethylenes.

10. The thermal runaway protection film according to any one of claims 8 to 9,
wherein the liner comprises a polymer selected from polyester, polyether, polyethenlenetherephthalate, polypropylene, wherein the first major surface comprises a silicone affine coating comprising a silicone release coating, and wherein the adhesive layer comprises a pressure sensitive adhesive.

11. The thermal runaway protection film according to any one of the preceding claims, wherein the at least one protection layer comprises at least 45 wt.-% of the at least one silicate compound and/or the at least one silicon oxide based compound, preferably of at least 50 wt.-%, more preferably of at least 60 wt.-%, even more preferably of at least 70 wt.-%, based on the total weight of the at least one layer.

12. The thermal runaway protection film according to any one of the preceding claims, wherein the at least one silicate compound and/or at least one silicon oxide compound is selected from kaolin, metakaolin, mullite, wollastonite, an aluminium oxide silicon oxide mineral filler and any combinations and mixtures thereof, preferably metakaolin, mullite, wollastonite, an aluminium oxide silicon oxide mineral filler and any combinations and mixtures thereof, and more preferably mullite, wollastonite and/or an aluminium oxide silicon oxide mineral filler, even more preferably mullite and/or an aluminium oxide silicon oxide mineral filler.

13. The thermal runaway protection film according to any one of the preceding claims, wherein the film is in the form of a sheet or a roll, preferably a level-wound roll.

14. Method of preparing a thermal runaway protection film, the method comprising the following steps:
(i) compounding at least one at least one silicate compound and/or silicon oxide mineral filler into silicone;
(ii) forming at least one protection layer from the silicone composition obtained in step (i); and
(iii) optionally, drying or curing the at least one protection layer obtained in step (ii), thereby obtaining a thermal runaway protection film;
wherein the at least one silicate compound and/or the silicon oxide mineral filler is contained in the at least one protection layer an amount of at least 40 wt.-%, based on the total weight of the at least one protection layer.

15. The method according to claim 14, wherein an adhesive film or adhesive tape is attached on the thermal protection runaway protection film.
